# EUROPEAN PATENT APPLICATION

(11) **EP 4 803 281 A1**
(43) Date of publication of application: **09.09.2026**
(21) Application number: 23957611.9
(22) Date of filing: 31.10.2023
(51) Int. Cl.: B29B 11/16

(54) **METHOD OF MANUFACTURING CURVED UD PREPREG TAPE**

(71) Applicant: IHI Aerospace Co., Ltd., Tomioka-shi, Gunma 370-2398 (JP); IHI Corporation, Tokyo 135-8710 (JP)
(72) Inventor: SHIMAZU, Yasuhiro, Tomioka-shi, Gunma 370-2398 (JP); TANAKA, Shinichi, Tomioka-shi, Gunma 370-2398 (JP); INADA, Takaomi, Tokyo 135-8710 (JP)
(74) Representative: Epping - Hermann - Fischer
(86) International application number: PCT/JP2023/039308
(87) International publication number: WO 2025/094283

(57) **Abstract**

Provided is a method capable of curving a UD prepreg tape to have a uniform thickness and width along its longitudinal direction without causing a defect.

The method for manufacturing a curved UD prepreg tape includes repeating an operation of shear-deforming, in a longitudinal direction of a linear UD prepreg tape, a deformable site between two boundary portions located at symmetrical positions with respect to a central portion in the longitudinal direction of the linear UD prepreg tape to displace non-deformable sites located at the end portion sides with respect to the two boundary portions of the UD prepreg tape in opposite directions transverse to the longitudinal direction of the UD prepreg tape, while shifting positions of the two boundary portions from end portion sides to the central portion of the UD prepreg tape.

## Description

### Technical Field

The present disclosure relates to a method for manufacturing a curved UD prepreg tape.

### Background Art

Uni-directional (UD) prepreg is used for structures and the like that are required to have particularly high specific strength among those manufactured from fiber-reinforced composite materials. The UD prepreg is a material in which a matrix resin is impregnated into reinforcing fibers aligned to be oriented in one direction. By designing the orientation of the reinforcing fibers, high specific strength can be achieved.

However, at present, in order to form a structure having a shape with a free-form surface or a curved shape by laminating UD prepregs, it is necessary to cut the UD prepregs in the direction in which the reinforcing fibers are cut and then patch them together to form a desired shape. Therefore, the advantages of the UD prepreg described above cannot be fully utilized.

Alternatively, in a case where UD prepreg tapes are laminated into the above-described shape without cutting the reinforcing fibers while maintaining their linear shape, a gap and/or an overlap occurs between two adjacent UD prepreg tapes, which may cause a defect after molding.

In order to avoid this, it is necessary to arrange the UD prepreg tapes in a curved manner so that neither a gap nor an overlap occurs between two adjacent UD prepreg tapes in the laminated state on the mold.

In addition, a structure having higher specific strength can be produced by laminating and molding the curved UD prepregs in such a manner that the reinforcing fibers are oriented in the direction of the stress acting on the structure.

Conventionally, there have been the following methods of curving UD prepreg.

As a first method, a difference in circumferential length between an inner circumference and an outer circumference of a curved portion is offset by causing the reinforcing fibers to undulate in-plane or out-of-plane.

In this case, the undulation of the reinforcing fibers may cause a defect after molding, and thus it is desirable to use a small-width (that is, thin) UD prepreg tape in order to minimize the undulation. This is because the small-width UD prepreg tape has a small difference in circumferential length between the inner circumference and the outer circumference in the curved portion.

However, even when the small-width UD prepreg tape is used, a defect caused by undulation cannot be completely eliminated, and moreover, the number of necessary UD prepreg tapes increases, leading to an increase in manufacturing cost.

As a second method, a curved portion is approximated as a plurality of parallelogram sections aligned along the center line of the curved portion, and a process of forming each parallelogram section by shear-deforming a linear UD prepreg tape in a direction perpendicular to its longitudinal direction is repeated.

In this method, the reinforcing fibers do not undulate in-plane or out-of-plane, and therefore, it is possible to eliminate a defect caused by such undulation as in the first method.

However, the shear deformation not only changes the thickness of the UD prepreg tape, but also changes the width of the UD prepreg tape in a direction perpendicular to the center line of the curved portion. Therefore, the finished curved UD prepreg tape has a problem that the thickness and the width are non-uniform along its longitudinal direction. Furthermore, in principle, the prepreg cannot be bent by 90° or more from the longitudinal direction of the prepreg at the time when the curving begins.

As described above, with the conventional methods, it has been substantially impossible to curve a UD prepreg tape so as to have a uniform thickness and width along its longitudinal direction without causing a defect.

### Summary of the Invention

### Problems to be solved by the Invention

The present disclosure has been made in view of the above-described problems, and an object of the present disclosure is to provide a method capable of curving a UD prepreg tape so as to have a uniform thickness and width along a longitudinal direction thereof without causing a defect.

### Means for Solving the Problems

In order to solve the aforementioned problems, a method for manufacturing a curved UD prepreg tape according to the present disclosure includes repeating an operation of shear-deforming, in a longitudinal direction of a linear UD prepreg tape, a deformable site between two boundary portions located at symmetrical positions with respect to a central portion in the longitudinal direction of the linear UD prepreg tape to displace non-deformable sites located at the end portion sides with respect to the two boundary portions of the UD prepreg tape in opposite directions transverse to the longitudinal direction of the UD prepreg tape, while shifting positions of the two boundary portions from end portion sides to the central portion of the UD prepreg tape.

### Advantageous Effects of the Invention

According to the present disclosure, a UD prepreg tape can be curved to have a uniform thickness and width along a longitudinal direction thereof without causing a defect.

### Brief Description of the Drawings

FIG. 1A is a schematic explanatory diagram illustrating a basic principle of a method according to the present disclosure, and illustrates a linear UD prepreg tape, which is used as a material for producing a curved UD prepreg tape.
FIG. 1B is a schematic explanatory diagram illustrating the basic principle of the method according to the present disclosure, and illustrates a state of a deformable site to be subjected to shear deformation in the UD prepreg tape before being deformed.
FIG. 1C is a schematic explanatory diagram illustrating the basic principle of the method according to the present disclosure, and illustrates a state of the deformable site after being deformed.
FIG. 1D is a schematic explanatory diagram illustrating the basic principle of the method according to the present disclosure, and illustrates a finally obtained curved UD prepreg tape.
FIG. 2A is a schematic explanatory diagram illustrating a method according to a first embodiment of the present disclosure, and illustrates a linear UD prepreg tape, which is used as a material for producing a curved UD prepreg tape.
FIG. 2B is a schematic explanatory diagram illustrating the method according to the first embodiment of the present disclosure, and illustrates a state in which truncated cone-shaped rollers are arranged at two end portions in a longitudinal direction of the UD prepreg tape.
FIG. 2C is a schematic explanatory diagram illustrating the method according to the first embodiment of the present disclosure, and illustrates a situation in which a deformable site between two boundary portions is shear-deformed by rotating the two rollers, and as a result, two non-deformable sites between the boundary portions and end portions of the UD prepreg tape are rotationally displaced in opposite directions transverse to the longitudinal direction.
FIG. 2D is a schematic explanatory diagram illustrating the method according to the first embodiment of the present disclosure, and illustrates a situation where the operation illustrated in FIG. 2C is repeated while shifting the respective positions of the two boundary portions towards a central portion of the UD prepreg tape at the same speed.
FIG. 2E is a schematic explanatory diagram illustrating the method according to the first embodiment of the present disclosure, and illustrates a finally obtained curved UD prepreg tape.
FIG. 3A is a schematic explanatory diagram illustrating a method according to a first modification of the first embodiment of the present disclosure, and illustrates a linear UD prepreg tape, which is used as a material for producing a curved UD prepreg tape.
FIG. 3B is a schematic explanatory diagram illustrating the method according to the first modification of the first embodiment of the present disclosure, and illustrates a state in which truncated cone-shaped rollers are arranged at two end portions in a longitudinal direction of the UD prepreg tape.
FIG. 3C is a schematic explanatory diagram illustrating the method according to the first modification of the first embodiment of the present disclosure, and illustrates a situation in which an operation of shear-deforming a deformable site between two boundary portions by rotating the two rollers is repeated, while shifting the respective positions of the two boundary portions toward a central portion of the UD prepreg tape at the same speed, and the two boundary portions reach curvature boundaries in two curved portions of a finally obtained curved UD prepreg tape.
FIG. 3D is a schematic explanatory diagram illustrating the method according to the first modification of the first embodiment of the present disclosure, and illustrates a situation after the two rollers of FIG. 3C are shifted by the same distance in directions of their respective rotational axes (in directions in which their diameters decrease).
FIG. 3E is a schematic explanatory diagram illustrating the method according to the first modification of the first embodiment of the present disclosure, and illustrates a situation in which an operation of shear-deforming the deformable site between the two boundary portions by rotating the two rollers is repeated, while shifting the respective positions of the two boundary portions toward the central portion of the UD prepreg tape at the same speed.
FIG. 3F is a schematic explanatory diagram illustrating the method according to the first modification of the first embodiment of the present disclosure, and illustrates a finally obtained curved UD prepreg tape.
FIG. 4A is a schematic explanatory diagram illustrating a method according to a second modification of the first embodiment of the present disclosure, and illustrates a linear UD prepreg tape, which is used as a material for producing a curved UD prepreg tape.
FIG. 4B is a schematic explanatory diagram illustrating the method according to the second modification of the first embodiment of the present disclosure, and illustrates a state in which truncated cone-shaped rollers are arranged at two end portions in a longitudinal direction of the UD prepreg tape.

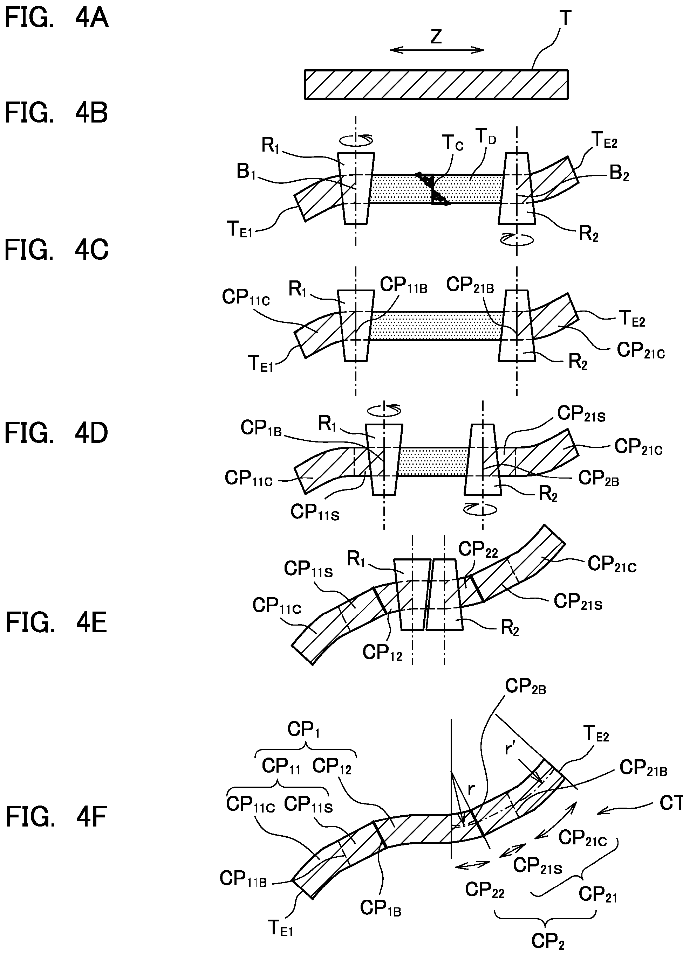

FIG. 4C is a schematic explanatory diagram illustrating the method according to the second modification of the first embodiment of the present disclosure, and illustrates a situation in which an operation of shear-deforming a deformable site between two boundary portions by rotating the two rollers is repeated, while shifting the respective positions of the two boundary portions toward a central portion of the UD prepreg tape at the same speed, and the two boundary portions reach a shape boundary between an arcuate portion and a linear portion of one of two curvature portions constituting two curved portions of a finally obtained curved UD prepreg tape.
FIG. 4D is a schematic explanatory diagram illustrating the method according to the second modification of the first embodiment of the present disclosure, and illustrates a situation after the two rollers shift to a curvature boundary between the two curvature portions constituting the two curved portions of the finally obtained curved UD prepreg tape.
FIG. 4E is a schematic explanatory diagram illustrating the method according to the second modification of the first embodiment of the present disclosure, and illustrates a situation in which an operation of shear-deforming the deformable site between the two boundary portions by rotating the two rollers is repeated, while shifting the respective positions of the two boundary portions toward the central portion of the UD prepreg tape at the same speed.
FIG. 4F is a schematic explanatory diagram illustrating the method according to the second modification of the first embodiment of the present disclosure, and illustrates a finally obtained curved UD prepreg tape.
FIG. 5A is a schematic explanatory diagram illustrating a basic principle of a method according to a second embodiment of the present disclosure, and illustrates a form of a UD prepreg tape before a deformable site between two boundary portions is shear-deformed.
FIG. 5B is a schematic explanatory diagram illustrating the basic principle of the method according to the second embodiment of the present disclosure, and illustrates a form of the UD prepreg tape after the deformable site between the two boundary portions is shear-deformed.
FIG. 6A is a schematic explanatory diagram illustrating the method according to the second embodiment of the present disclosure, and illustrates a linear UD prepreg tape, which is used as a material for producing a curved UD prepreg tape.
FIG. 6B is a schematic explanatory diagram illustrating the method according to the second embodiment of the present disclosure, and illustrates a state in the middle of repeating an operation of shear-deforming a deformable site by rotating two clips while shifting the respective positions of the two boundary portions held by the two clips from two end portion sides toward a central portion of the UD prepreg tape.
FIG. 6C is a schematic explanatory diagram illustrating the method according to the second embodiment of the present disclosure, and illustrates a state after further repeating the operation of shear-deforming the deformable site by rotating the two clips while shifting the respective positions of the two boundary portions held by the two clips from the two end portion sides toward the central portion of the UD prepreg tape.

### Mode for Carrying out the Invention

Hereinafter, a method according to an embodiment of the present disclosure will be described in detail with reference to the drawings.

The method according to the present disclosure includes repeating an operation of shear-deforming, in a longitudinal direction of a linear UD prepreg tape, a site between two boundary portions located at symmetrical positions with respect to a central portion in the longitudinal direction of the linear UD prepreg tape, using an appropriate means, to displace sites located at the end portion sides with respect to the two boundary portions of the UD prepreg tape in opposite directions transverse to the longitudinal direction of the UD prepreg tape, while shifting positions of the two boundary portions from end portion sides to the central portion of the UD prepreg tape, thereby obtaining a UD prepreg tape curved into a desired shape.

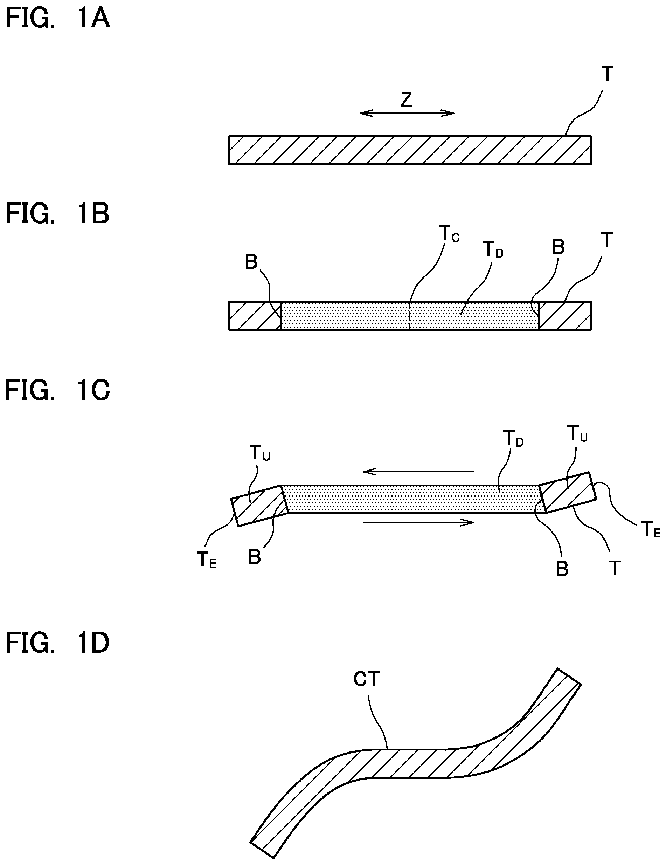

First, the basic principle of the method according to the present disclosure described above will be described below with reference to FIG. 1.

FIGS. 1A to 1D are schematic explanatory diagrams illustrating the basic principle of curving a linear UD prepreg tape using the method according to the present disclosure. These drawings are all top views of the UD prepreg tape.

FIG. 1A illustrates a linear UD prepreg tape T, which is used as a material for producing a curved UD prepreg tape. Although not illustrated, reinforcing fibers are oriented in the longitudinal direction Z of the UD prepreg tape T.

FIG. 1B illustrates a state of a deformable site T_{D} to be subjected to shear deformation in the UD prepreg tape T before being deformed.

The deformable site T_{D} is a portion having two boundary portions B as both ends thereof at symmetrical positions with respect to a central portion T_{C} in the longitudinal direction Z of the UD prepreg tape T, and has a rectangular shape in the illustrated example.

Before being deformed, the deformable site T_{D} is heated by an appropriate means to a temperature at which a matrix resin contained in the UD prepreg tape T is easily deformed. Then, appropriate tools (not illustrated) are placed at the respective positions of the two boundary portions B, and the deformable site T_{D} between the two boundary portions B is shear-deformed in the longitudinal direction Z of the UD prepreg tape T by the tools.

FIG. 1C illustrates a state of the deformable site T_{D} after being deformed.

In this drawing, as a result of shear-deforming the deformable site T_{D} (see opposite arrows illustrated above and below the deformable site T_{D} in the drawing), the two boundary portions B are both rotated in the clockwise direction.

Here, in this drawing, T_{U} denotes two non-deformable sites each located between each of the two end portions T_{E} and each of the two boundary portions B of the UD prepreg tape T. Each of the non-deformable sites T_{U} is connected to the deformable site T_{D} via the boundary portion B. Therefore, when the boundary portions B rotate in the clockwise direction as described above, the two non-deformable sites T_{U} are rotationally displaced in opposite directions (upward and downward directions in the drawing) transverse to the longitudinal direction Z of the UD prepreg tape T. Specifically, in the drawing, the non-deformable site T_{U} on the left side is rotationally displaced upward, and the non-deformable site T_{U} on the right side is rotationally displaced downward.

As a result, the UD prepreg tape T has an S-shaped shape as a whole, being bent in opposite directions at the two boundary portions B.

By repeating the operation of shear-deforming the deformable site T_{D} between the two boundary portions B in the longitudinal direction Z of the UD prepreg tape T using the tools disposed at the respective positions of the two boundary portions B as described above while shifting the positions of the boundary portions B from the end portions T_{E} side to the central portion T_{C}, it is possible to obtain a UD prepreg tape CT curved into a desired shape as illustrated in FIG. 1D.

A specific embodiment for obtaining a curved UD prepreg tape CT from a UD prepreg tape T by applying the basic principle described above will be described in detail below.

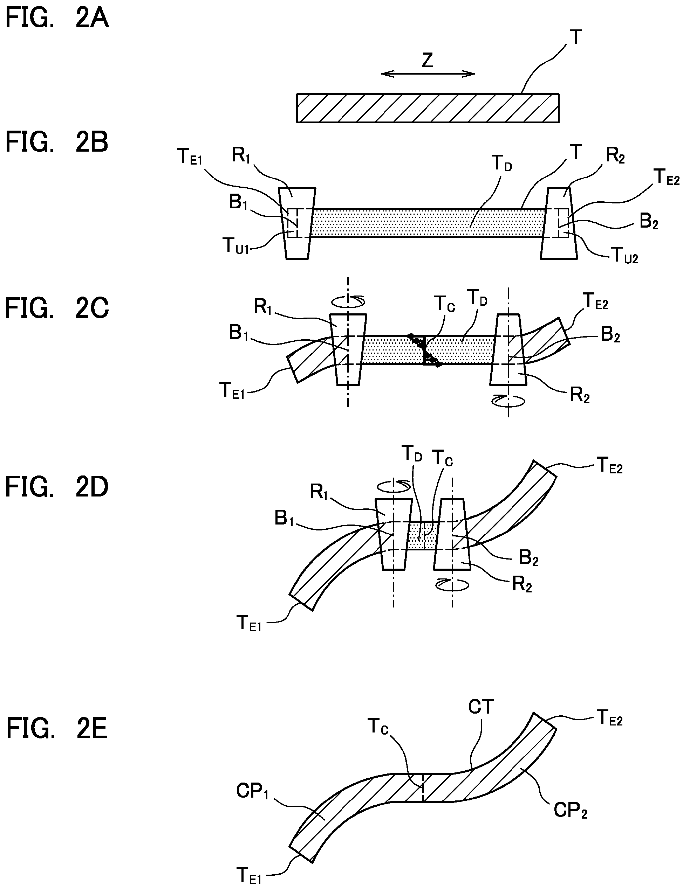

FIGS. 2A to 2E are schematic explanatory diagrams illustrating a method according to a first embodiment of the present disclosure. These drawings are all top views of the UD prepreg tape.

In these drawings, a case is exemplified in which a UD prepreg tape is curved into a shape to have two curved portions having the same single curvature in opposite directions (see two curved portions CP₁ and CP₂ in FIG. 2E).

In the first embodiment, a roller having a truncated cone shape is employed as a tool for shear-deforming the deformable site of the UD prepreg tape.

FIG. 2A illustrates a linear UD prepreg tape T, which is used as a material for producing a curved UD prepreg tape. Although not illustrated, reinforcing fibers are oriented in the longitudinal direction Z of the UD prepreg tape T.

FIG. 2B illustrates a state in which rollers R₁ and R₂ each having a truncated cone shape are arranged at positions from the two end portions T_{E1} and T_{E2} slightly toward the central portion T_{C} in the longitudinal direction Z of the UD prepreg tape T, with directions of their respective rotational axes being perpendicular to the longitudinal direction Z of the UD prepreg tape T. In this state, the position where the first roller R₁ is disposed is a first boundary portion B₁, the position where the second roller R₂ is disposed is a second boundary portion B₂, and the portion between the first boundary portion B₁ and the second boundary portion B₂ is the deformable site T_{D}. Then, the deformable site T_{D} is heated as described above before being deformed.

Note that the two truncated cone-shaped rollers R₁ and R₂ have the same shape, but are arranged such that the directions in which their diameters decrease are opposite to each other. Specifically, the first roller R₁ is disposed such that its diameter decreases from an outer peripheral side toward an inner peripheral side (that is, from top to bottom in FIG. 2B) of a first curved portion CP₁ (see FIG. 2E) formed on a first end portion T_{E1} side in the finally obtained curved UD prepreg tape CT, and the second roller R₂ is disposed such that its diameter decreases from an outer peripheral side toward an inner peripheral side (that is, from bottom to top in FIG. 2B) of a second curved portion CP₂ (see FIG. 2E) formed on a second end portion T_{E2} side in the finally obtained curved UD prepreg tape CT.

In this state, when the first and second rollers R₁ and R₂ are rotated in directions such that the boundary portions B₁ and B₂ that are in contact with the rollers R₁ and R₂ in the initial state move away from each other, while the side surfaces thereof are in contact with the surface of the UD prepreg tape T, side edges located on the larger diameter sides of the respective rollers (the upper side in the drawing for the first roller R₁ and the lower side in the drawing for the second roller R₂), among the side edges of the UD prepreg tape T, are pulled relatively more than the side edges located on the opposite sides in directions from the central portion T_{C} toward the respective end portions T_{E1} and T_{E2} of the UD prepreg tape T. As a result, the deformable site T_{D} is shear-deformed.

At this time, a first non-deformable site T_{U1} between the first boundary portion B₁ and the first end portion T_{E1} is rotationally displaced in a first direction (a direction toward the center of curvature of the first curved portion CP₁) (that is, downward in the drawing) transverse to the longitudinal direction Z, and a second non-deformable site T_{U2} between the second boundary portion B₂ and the second end portion T_{E2} is rotationally displaced in a second direction (a direction toward the center of curvature of the second curved portion CP₂) (that is, upward in the drawing) transverse to the longitudinal direction Z (not illustrated; see FIG. 1C).

The operation described above is repeated while shifting the position of the first boundary portion B₁ from the first end portion T_{E1} side to the central portion T_{C} and shifting the position of the second boundary portion B₂ from the second end portion T_{E2} side to the central portion T_{C}, in other words, shifting the positions where the two rollers R₁ and R₂ are disposed toward the central portion T_{C}, at the same speed (see FIG. 2C; in this drawing, the shear deformation of the deformable site T_{D} is symbolically represented by a displacement distribution in the longitudinal direction Z depicted at the central portion thereof).

Then, when the positions of the boundary portions B₁ and B₂ reach end portions on the central portion T_{C} side of the portions to be curved in the UD prepreg tape T (see FIG. 2D), the repetition of the above-described operation is completed. As a result, the curved UD prepreg tape CT illustrated in FIG. 2E is finally obtained.

Here, the curved UD prepreg tape CT obtained by the above-described method has a point-symmetrical shape with respect to the central portion T_{C}. Thus, by cutting the obtained curved UD prepreg tape CT at the central portion T_{C}, it is possible here to obtain two curved UD prepreg tapes having the same shape, mainly consisting of a first curved portion CP₁ and a second curved portion CP₂, respectively. In this manner, by simultaneously producing curved UD prepreg tapes having a point-symmetrical shape from both ends, it is possible to offset the accumulation of shear deformation.

Note that the method described above can be said to be a method capable of simultaneously producing two curved UD prepreg tapes to be laminated even when the curved UD tapes do not have a point-symmetrical shape.

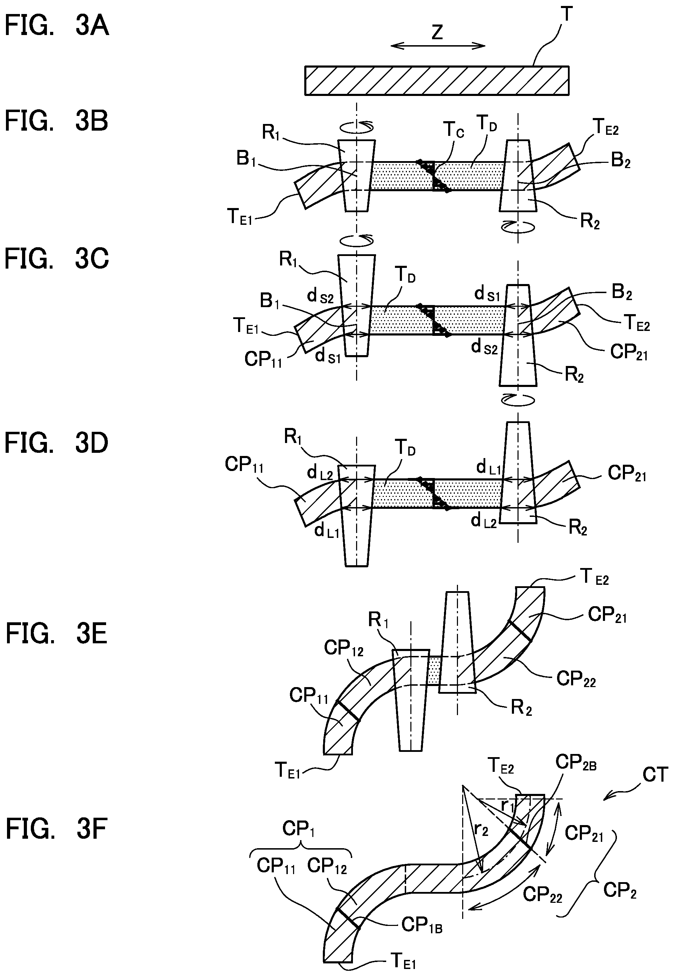

Next, a method according to a modification of the first embodiment of the present disclosure will be described. In FIGS. 2A to 2E, the case where the shapes of the two curved portions of the curved UD prepreg tape finally obtained have the same single curvature in opposite directions has been described. However, a case where the shapes have the same multiple curvatures in opposite directions will be described below with reference to FIGS. 3A to 3F and FIGS. 4A to 4F.

FIGS. 3A to 3F are schematic explanatory diagrams illustrating a first modification of the first embodiment.

In these drawings, a case is exemplified in which the UD prepreg tape is curved into a point-symmetrical shape having two curved portions (first and second curved portions) each including two different curvature portions (first and second curvature portions).

Specifically, as illustrated in FIG. 3F, in the second curved portion CP₂, a first curvature portion CP₂₁ having a curvature radius r₁ and a second curvature portion CP₂₂ having a curvature radius r₂ are arranged adjacent to each other in order from the second end portion T_{E2} of the finally obtained curved UD prepreg tape CT. Similarly, in the first curved portion CP₁, a first curvature portion CP₁₁ (whose curvature radius is r₁ although not illustrated) and a second curvature portion CP₁₂ (whose curvature radius is r₂ although not illustrated) are arranged adjacent to each other in order from the first end portion T_{E1} of the finally obtained curved UD prepreg tape CT. In the present example, it is assumed that the two curvature radii satisfy a relationship of r₁<r₂.

In the first curved portion CP₁, a boundary between the first curvature portion CP₁₁ and the second curvature portion CP₁₂ is a first curvature boundary CP_{1B}, and in the second curved portion CP₂, a boundary between the first curvature portion CP₂₁ and the second curvature portion CP₂₂ is a second curvature boundary CP_{2B}.

In the first modification, in order to change the curvature of the two curved portions in the middle of the formation of the two curved portions, a method is adopted in which the diameter of the site that contacts the surface of the UD prepreg tape is changed by shifting the truncated cone-shaped roller in the direction of its rotational axis.

FIG. 3A illustrates a linear UD prepreg tape T, which is used as a material for producing a curved UD prepreg tape. Although not illustrated, reinforcing fibers are oriented in the longitudinal direction Z of the UD prepreg tape T.

FIG. 3B illustrates a state in which rollers R₁ and R₂ each having a truncated cone shape are arranged at positions from the two end portions T_{E1} and T_{E2} slightly toward the central portion T_{C} in the longitudinal direction Z of the UD prepreg tape T, with directions of their respective rotational axes being perpendicular to the longitudinal direction Z of the UD prepreg tape T. That is, in this state, the position where the first roller R₁ is disposed is a first boundary portion B₁, the position where the second roller R₂ is disposed is a second boundary portion B₂, and the portion between the first boundary portion B₁ and the second boundary portion B₂ is the deformable site T_{D}. Then, the deformable site T_{D} is heated as described above before being deformed.

Note that the two truncated cone-shaped rollers R₁ and R₂ have the same shape, but are arranged such that the directions in which their diameters decrease along their rotational axes are opposite to each other. Specifically, the first roller R₁ is disposed such that its diameter decreases from an outer peripheral side toward an inner peripheral side (that is, from top to bottom in FIG. 3B) of a first curved portion CP₁ (see FIG. 3F) formed on a first end portion T_{E1} side in the finally obtained curved UD prepreg tape CT, and the second roller R₂ is disposed such that its diameter decreases from an outer peripheral side toward an inner peripheral side (that is, from bottom to top in FIG. 3B) of a second curved portion CP₂ (see FIG. 3F) formed on a second end portion T_{E2} side in the finally obtained curved UD prepreg tape CT.

In this state, when the first and second rollers R₁ and R₂ are rotated in directions such that the boundary portions B₁ and B₂ that are in contact with the rollers R₁ and R₂ in the initial state move away from each other, while the side surfaces thereof are in contact with the surface of the UD prepreg tape T, side edges located on the larger diameter sides of the respective rollers (the upper side in the drawing for the first roller R₁ and the lower side in the drawing for the second roller R₂), among the side edges of the UD prepreg tape T, are pulled relatively more than the side edges located on the opposite sides in directions from the central portion T_{C} toward the respective end portions T_{E1} and T_{E2} of the UD prepreg tape T. As a result, the deformable site T_{D} is shear-deformed.

At this time, a first non-deformable site T_{U1} between the first boundary portion B₁ and the first end portion T_{E1} is rotationally displaced in a first direction (a direction toward the center of curvature of the first curved portion CP₁) (that is, downward in the drawing) transverse to the longitudinal direction Z, and a second non-deformable site T_{U2} between the second boundary portion B₂ and the second end portion T_{E2} is rotationally displaced in a second direction (a direction toward the center of curvature of the second curved portion CP₂) (that is, upward in the drawing) transverse to the longitudinal direction Z (not illustrated; see FIG. 1C).

The operation described above is repeated while shifting the position of the first boundary portion B₁ from the first end portion T_{E1} side to the central portion T_{C} and shifting the position of the second boundary portion B₂ from the second end portion T_{E2} side to the central portion T_{C}, in other words, shifting the positions where the two rollers R₁ and R₂ are disposed toward the central portion T_{C}, at the same speed (see FIG. 3C; in this drawing, the shear deformation of the deformable site T_{D} is symbolically represented by a displacement distribution in the longitudinal direction Z depicted at the central portion thereof).

However, this repetition is temporarily interrupted at a point of time when the first roller R₁ reaches a position corresponding to the first curvature boundary CP_{1B} in the first curved portion CP₁ and the second roller R₂ reaches a position corresponding to the second curvature boundary CP_{2B} in the second curved portion CP₂. Through the processes up to this point, the first curvature portion CP₁₁ of the first curved portion CP₁ and the first curvature portion CP₂₁ of the second curved portion CP₂ are formed (see FIG. 3C).

At this point of time, the first roller R₁ and the second roller R₂ are shifted by the same distance in the directions of their respective rotational axes, specifically in the directions in which their diameters decrease.

Here, before being shifted, the first roller R₁ is in contact with the surface of the UD prepreg tape T at a site having a diameter from d_{S1} to d_{S2}. Similarly, the second roller R₂ is in contact with the surface of the UD prepreg tape T at a site having a diameter from d_{S1} to d_{S2}. However, the two diameters satisfy a relationship of d_{S1}<d_{S2} (see FIG. 3C).

On the other hand, after the rollers are shifted by the same distance in the directions of their respective rotational axes, specifically, in the directions in which their diameters decrease, the first roller R₁ is in contact with the surface of the UD prepreg tape T at a site having a diameter from d_{L1} to d_{L2}. Similarly, the second roller R₂ is in contact with the surface of the UD prepreg tape T at a site having a diameter from d_{L1} to d_{L2}. However, the two diameters satisfy a relationship of d_{L1}<d_{L2} (see FIG. 3D).

Furthermore, the above-described four diameters satisfy at least relationships of d_{S1}<d_{L1} and d_{S2}<d_{L2} (see FIGS. 3C and 3D).

Here, the above-described diameters satisfy a relationship of d_{L2}/d_{L1}<d_{S2}/d_{S1} based on the geometrical feature of the truncated cone. This means that the rotational displacement of the boundary portions B₁ and B₂ caused by the shear deformation of the deformable site T_{D} by the rollers R₁ and R₂ before being shifted is larger than the rotational displacement of the boundary portions B₁ and B₂ caused by the shear deformation of the deformable site T_{D} by the rollers R₁ and R₂ after being shifted. In other words, this means that the curvature of the first curvature portion CP₁₁ formed by the rollers R₁ and R₂ before being shifted is larger than the curvature of the second curvature portion CP₁₂ formed by the rollers R₁ and R₂ after being shifted, and thus the curvature radius r₁ of the first curvature portion CP₁₁ is smaller than the curvature radius r₂ of the second curvature portion CP₁₂ (r₁<r₂ as described above).

After each of the two rollers R₁ and R₂ is shifted as described above, the same operation as before the shift is repeated again, while shifting the position of the first boundary portion B₁ from the first end portion T_{E1} side to the central portion T_{C} and shifting the position of the second boundary portion B₂ from the second end portion T_{E2} side to the central portion T_{C}, in other words, shifting the positions where the two rollers R₁ and R₂ are disposed toward the central portion T_{C}, at the same speed. As a result, the second curvature portion CP₁₂ of the first curved portion CP₁ and the second curvature portion CP₂₂ of the second curved portion CP₂ are formed (see FIG. 3E).

Then, when the positions of the boundary portions B₁ and B₂ reach end portions on the central portion T_{C} side of the portions to be curved in the UD prepreg tape T (see FIG. 3E), the repetition of the above-described operation is completed. As a result, the curved UD prepreg tape CT illustrated in FIG. 3F is finally obtained.

In the above description, the case has been described in which the curvature radius r₁ of the first curvature portion CP₁₁ is smaller than the curvature radius r₂ of the second curvature portion CP₁₂ (r₁ r₂). However, in a case where the curvature radius r₁ of the first curvature portion CP₁₁ is larger than the curvature radius r₂ of the second curvature portion CP₁₂ (r₁>r₂), the first roller R₁ and the second roller R₂ are shifted by the same distance in directions opposite to the directions in which their diameters decrease along their rotational axes.

FIGS. 4A to 4F are schematic explanatory diagrams illustrating a second modification of the first embodiment.

In these drawings, a case is exemplified in which the UD prepreg tape is curved into a point-symmetrical shape having two curved portions (first and second curved portions) each including two different curvature portions (first and second curvature portions).

Specifically, as illustrated in FIG. 4F, in the second curved portion CP₂, a first curvature portion CP₂₁ having a curvature radius r' and a second curvature portion CP₂₂ having a curvature radius r are arranged adjacent to each other in order from the second end portion T_{E2} of the finally obtained curved UD prepreg tape CT. Similarly, in the first curved portion CP₁, a first curvature portion CP₁₁ (whose curvature radius is r' although not illustrated) and a second curvature portion CP₁₂ (whose curvature radius is r although not illustrated) are arranged adjacent to each other in order from the first end portion T_{E1} of the finally obtained curved UD prepreg tape CT. In the present example, it is assumed that the two curvature radii satisfy a relationship of r<r'.

However, the first curvature portion CP₂₁ of the second curved portion CP₂ includes, in order from the second end portion T_{E2}, an arcuate portion CP_{21C} having a curvature radius r and a linear portion CP_{21S}, and is a portion that can be approximately regarded as having a curvature radius r' as a whole. Similarly, the first curvature portion CP₁₁ of the first curved portion CP₁ includes, in order from the first end portion T_{E1}, an arcuate portion CP_{11C} (whose curvature radius is r although not illustrated) and a linear portion CP_{11S}, and is a portion that can be approximately regarded as having a curvature radius r' as a whole.

In the second curved portion CP₂, a boundary between the arcuate portion CP_{21C} and the linear portion CP_{21S} of the first curvature portion CP₂₁ is a second shape boundary CP_{21B}, and a boundary between the first curvature portion CP₂₁ and the second curvature portion CP₂₂ is a second curvature boundary CP_{2B}. Similarly, in the first curved portion CP₁, a boundary between the arcuate portion CP_{11C} and the linear portion CP_{11S} of the first curvature portion CP₁₁ is a first shape boundary CP_{11B}, and a boundary between the first curvature portion CP₁₁ and the second curvature portion CP₁₂ is a first curvature boundary CP_{1B}.

In the second modification, as a means of changing the curvature of the two curved portions in the middle of the formation of the two curved portions, a method is adopted in which a process of bringing the truncated cone-shaped rollers into contact with the surface of the UD prepreg tape and shear-deforming the deformable site is combined with a process of shifting the truncated cone-shaped rollers without bringing the truncated cone-shaped rollers in contact with the surface of the UD prepreg tape.

FIG. 4A illustrates a linear UD prepreg tape T, which is used as a material for producing a curved UD prepreg tape. Although not illustrated, reinforcing fibers are oriented in the longitudinal direction Z of the UD prepreg tape T.

FIG. 4B illustrates a state in which rollers R₁ and R₂ each having a truncated cone shape are arranged at positions from the two end portions T_{E1} and T_{E2} slightly toward the central portion T_{C} in the longitudinal direction Z of the UD prepreg tape T, with directions of their respective rotational axes being perpendicular to the longitudinal direction Z of the UD prepreg tape T. That is, in this state, the position where the first roller R₁ is disposed is a first boundary portion B₁, the position where the second roller R₂ is disposed is a second boundary portion B₂, and the portion between the first boundary portion B₁ and the second boundary portion B₂ is the deformable site T_{D}. Then, the deformable site T_{D} is heated as described above before being deformed.

Note that the two truncated cone-shaped rollers R₁ and R₂ have the same shape, but are arranged such that the directions in which their diameters decrease are opposite to each other. Specifically, the first roller R₁ is disposed such that its diameter decreases from an outer peripheral side toward an inner peripheral side (that is, from top to bottom in FIG. 4B) of a first curved portion CP₁ (see FIG. 4F) formed on a first end portion T_{E1} side in the finally obtained curved UD prepreg tape CT, and the second roller R₂ is disposed such that its diameter decreases from an outer peripheral side toward an inner peripheral side (that is, from bottom to top in FIG. 4B) of a second curved portion CP₂ (see FIG. 4F) formed on a second end portion T_{E2} side in the finally obtained curved UD prepreg tape CT.

In this state, when the first and second rollers R₁ and R₂ are rotated in directions such that the boundary portions B₁ and B₂ that are in contact with the rollers R₁ and R₂ in the initial state move away from each other, while the side surfaces thereof are in contact with the surface of the UD prepreg tape T, side edges located on the larger diameter sides of the respective rollers (the upper side in the drawing for the first roller R₁ and the lower side in the drawing for the second roller R₂), among the side edges of the UD prepreg tape T, are pulled relatively more than the side edges located on the opposite sides in directions from the central portion T_{C} toward the respective end portions T_{E1} and T_{E2} of the UD prepreg tape T. As a result, the deformable site T_{D} is shear-deformed.

At this time, a first non-deformable site T_{U1} between the first boundary portion B₁ and the first end portion T_{E1} is rotationally displaced in a first direction (a direction toward the center of curvature of the first curved portion CP₁) (that is, downward in the drawing) transverse to the longitudinal direction Z, and a second non-deformable site T_{U2} between the second boundary portion B₂ and the second end portion T_{E2} is rotationally displaced in a second direction (a direction toward the center of curvature of the second curved portion CP₂) (that is, upward in the drawing) transverse to the longitudinal direction Z (not illustrated; see FIG. 1C).

The operation described above is repeated while shifting the position of the first boundary portion B₁ from the first end portion T_{E1} side to the central portion T_{C} and shifting the position of the second boundary portion B₂ from the second end portion T_{E2} side to the central portion T_{C}, in other words, shifting the positions where the two rollers R₁ and R₂ are disposed toward the central portion T_{C}, at the same speed (see FIG. 4C; in this drawing, the shear deformation of the deformable site T_{D} is symbolically represented by a displacement distribution in the longitudinal direction Z depicted at the central portion thereof).

However, this repetition is temporarily interrupted at a point of time when the first roller R₁ reaches a position corresponding to the first shape boundary CP_{11B} in the first curved portion CP₁ and the second roller R₂ reaches a position corresponding to the second shape boundary CP_{21B} in the second curved portion CP₂. Through the processes up to this point, the arcuate portion CP_{11C} constituting the first curvature portion CP₁₁ of the first curved portion CP₁ and the arcuate portion CP_{11C} constituting the first curvature portion CP₂₁ of the second curved portion CP₂ are formed (see FIG. 4C).

Then, after the above-described processes, the first roller R₁ is shifted to a position corresponding to the first curvature boundary CP_{1B} in the first curved portion CP₁, and the second roller R₂ is shifted to a position corresponding to the second curvature boundary CP_{2B} in the second curved portion CP₂ (see FIG. 4D).

That is, in the UD prepreg tape T, the first roller R₁ and the second roller R₂ do not contact a portion between the position corresponding to the first shape boundary CP_{11B} and the position corresponding to the first curvature boundary CP_{1B} and a portion between the position corresponding to the second shape boundary CP_{21B} and the position corresponding to the second curvature boundary CP_{2B}, and no shear deformation operation is performed. As a result, these portions maintain the linear shape, becoming the linear portion CP_{11S} constituting the first curvature portion CP₁₁ of the first curved portion CP₁ and the linear portion CP_{21S} constituting the first curvature portion CP₂₁ of the second curved portion CP₂, respectively, in the finally obtained curved UD prepreg tape CT

Thereafter, the same operation is repeated while shifting the position of the first boundary portion B₁ from the position corresponding to the first curvature boundary CP_{1B} in the first curved portion CP₁ to the central portion T_{C} and shifting the position of the second boundary portion B₂ from the position corresponding to the second curvature boundary CP_{2B} in the second curved portion CP₂ to the central portion T_{C}, in other words, shifting the two rollers R₁ and R₂ toward the central portion T_{C}, at the same speed. As a result, the second curvature portion CP₁₂ of the first curved portion CP₁ and the second curvature portion CP₂₂ of the second curved portion CP₂ are formed (see FIG. 4E).

Then, when the positions of the boundary portions B₁ and B₂ reach end portions on the central portion T_{C} side of the portions to be curved in the UD prepreg tape T (see FIG. 4E), the repetition of the above-described operation is completed. As a result, the curved UD prepreg tape CT illustrated in FIG. 4F is finally obtained.

Next, a method according to a second embodiment of the present disclosure will be described.

In the second embodiment, when the deformable site of the UD prepreg tape is shear-deformed, the two boundary portions are held by clips.

That is, the method according to the second embodiment of the present disclosure includes repeating an operation of shear-deforming a deformable site between two boundary portions located at symmetrical positions with respect to a central portion in a longitudinal direction of a linear UD prepreg tape, the two boundary portions being held by clips, by rotating the two clips in the same direction by an angle bisected by a straight line extending in a direction perpendicular to the longitudinal direction of the UD prepreg tape to displace sites located at the end portion sides with respect to the two boundary portions of the UD prepreg tape in opposite directions transverse to the longitudinal direction of the UD prepreg tape, while shifting positions of the two boundary portions from end portion sides to the central portion of the UD prepreg tape, thereby obtaining a UD prepreg tape curved into a desired shape.

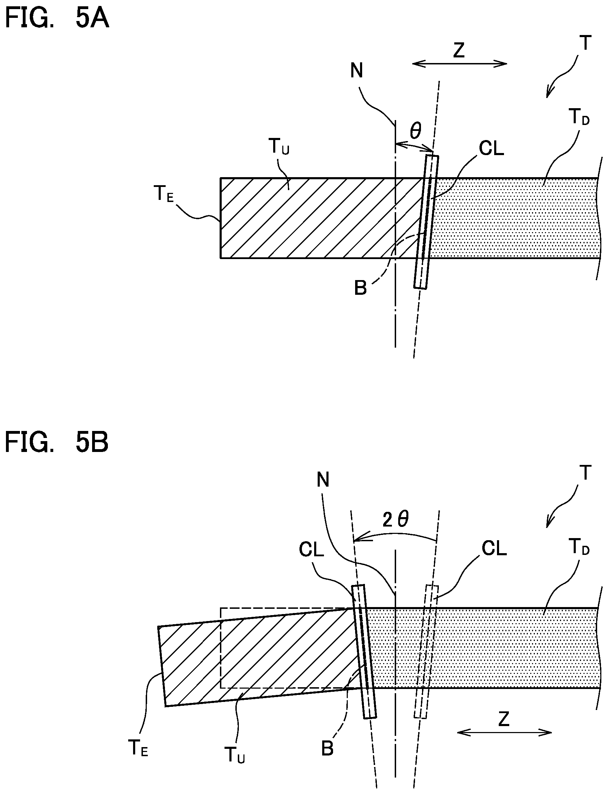

First, the basic principle of the second embodiment of the method according to the present disclosure described above will be described below with reference to FIGS. 5A and 5B.

FIGS. 5A and 5B are schematic explanatory diagrams illustrating forms of the UD prepreg tape before and after the two boundary portions described above are held by clips and a portion between the two boundary portions is shear-deformed, with FIG. 5A illustrating the form before deformation and FIG. 5B illustrating the form after deformation. Note that, in these drawings, the state of deformation around one of the two boundary portions is illustrated.

In FIG. 5A, B denotes one of the two boundary portions arranged at symmetrical positions with respect to the central portion (not illustrated) in the longitudinal direction Z of the UD prepreg tape T. The two boundary portions B, including one that is not illustrated, are both ends of the deformable site T_{D} to be subjected to shear deformation in the longitudinal direction Z of the UD prepreg tape T.

The boundary portion B is held by a clip CL (more specifically, the boundary portion B is clamped by the clip CL from both sides in the thickness direction of the UD prepreg tape T).

At this time, the clip CL is inclined at an angle θ with respect to a straight line N extending in a direction perpendicular to the longitudinal direction Z of the UD prepreg tape T. More precisely, the clip CL is inclined rearward (i.e. clockwise) by the above-described angle with respect to the rotational movement (the counterclockwise direction in the drawing) for shear-deforming the deformable site T_{D}. Therefore, the deformable site T_{D} has a parallelogram shape.

FIG. 5B illustrates a state in which the clip CL is rotated in the counterclockwise direction by an angle of 2θ from this state.

As the clip CL rotates in the counterclockwise direction, the boundary portion B held by the clip CL rotates by the angle of 2θ and is displaced leftward in the drawing. As a result, the deformable site T_{D} located to the right of the boundary portion B in the drawing is shear-deformed as a whole (that is, a portion between the illustrated boundary portion B and the other boundary portion, which is not illustrated, as a whole).

As is clear from FIGS. 5A and 5B, the rotation angle 2θ of the clip CL is an angle bisected by the straight line N extending in a direction perpendicular to the longitudinal direction Z of the UD prepreg tape T. By selecting the angle in this manner, shear deformation can be performed without changing the width and thickness of the UD prepreg tape T.

Here, in FIGS. 5A and 5B, T_{U} denotes a non-deformable site between the end portion T_{E} and the boundary portion B of the UD prepreg tape T. The non-deformable site T_{U} is connected to the deformable site T_{D} via the boundary portion B. Therefore, when the boundary portion B rotates in the counterclockwise direction as described above, the non-deformable site T_{U} is rotationally displaced in a direction (a vertical direction in the drawing) transverse to the longitudinal direction Z of the UD prepreg tape T, specifically downward (it goes without saying that the other non-deformable site, which is not illustrated, is rotationally displaced upward in the drawing).

As a result, the UD prepreg tape T has an S-shaped shape as a whole, being bent in opposite directions at the two boundary portions B.

The operation of shear-deforming the deformable site T_{D} by rotating each of the two boundary portions B using the clip CL as described above is repeated while shifting the position of the boundary portion B from the end portion T_{E} side to the central portion, whereby a UD prepreg tape curved into a desired shape can be obtained.

In FIGS. 5A and 5B, the clip CL is rotated about a point located outside the UD prepreg tape T, but the center of rotation of the clip CL may be located at the central portion (that is, the central portion in the width direction perpendicular to the longitudinal direction Z of the UD prepreg tape T) of the clip CL.

A specific embodiment for obtaining a curved UD prepreg tape CT from a UD prepreg tape T by applying the basic principle described above will be described in detail below.

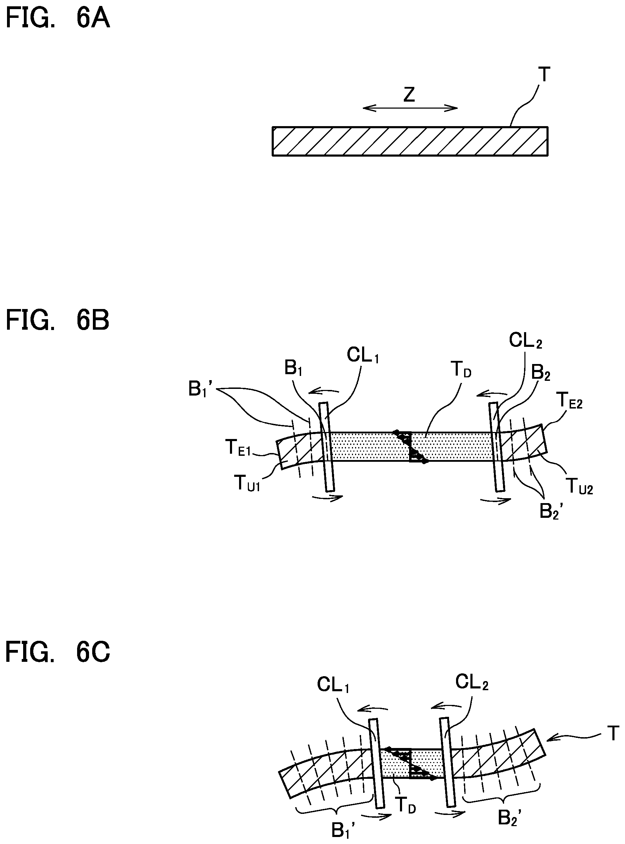

FIGS. 6A to 6C are schematic explanatory diagrams illustrating the second embodiment of the method according to the present disclosure. These drawings are all top views of the UD prepreg tape.

In these drawings, a case is exemplified in which a UD prepreg tape is curved into a shape to have two curved portions having the same single curvature in opposite directions.

FIG. 6A illustrates a linear UD prepreg tape T, which is used as a material for producing a curved UD prepreg tape. Although not illustrated, reinforcing fibers are oriented in the longitudinal direction Z of the UD prepreg tape T.

FIG. 6B illustrates a state in the middle of repeating an operation of shear-deforming the deformable site T_{D} by rotating each of the two clips CL₁ and CL₂, while shifting the respective positions of the two boundary portions B₁ and B₂ held by the two clips CL₁ and CL₂, respectively, from the respective sides of the two end portions T_{E1} and T_{E2} to the central portion of the UD prepreg tape T (see FIGS. 5A and 5B), after heating the entire UD prepreg tape T. Note that, in the drawings, H₁' and H₂' denote boundary portions corresponding to the operations that have already been performed.

FIG. 6C illustrates a state after the above-described operation is further repeated.

By doing so, a curved UD prepreg tape CT is finally obtained.

According to the method described above, since the UD prepreg tape is curved only through the in-plane shear deformation of the UD prepreg tape, the reinforcing fibers in the prepreg do not undulate in-plane or out-of-plane. Therefore, an occurrence of a defect caused by undulation can be eliminated. In addition, since a large-width (that is, thick) UD prepreg tape can be used, the cost can be reduced by shortening the time required for lamination as compared with the conventional technique, in which a small-width (that is, thin) UD prepreg tape needs to be used. Furthermore, since the large-width UD prepreg tape has a lower unit price per weight than the small-width UD prepreg tape, the cost can be reduced from this point as well.

### (Aspects of Present Disclosure)

According to a first aspect of the present disclosure, a method for manufacturing a curved UD prepreg tape includes repeating an operation of shear-deforming, in a longitudinal direction of a linear UD prepreg tape, a deformable site between two boundary portions located at symmetrical positions with respect to a central portion in the longitudinal direction of the linear UD prepreg tape to displace non-deformable sites located at the end portion sides with respect to the two boundary portions of the UD prepreg tape in opposite directions transverse to the longitudinal direction of the UD prepreg tape, while shifting positions of the two boundary portions from end portion sides to the central portion of the UD prepreg tape.

According to a second aspect of the present disclosure, in the method for manufacturing a curved UD prepreg tape, two rollers having a truncated cone shape are disposed at the two boundary portions with directions of rotational axes thereof being perpendicular to the longitudinal direction of the UD prepreg tape, directions in which diameters of the two rollers decrease along the rotational axes are opposite to each other, and the deformable site is shear-deformed by rotating the two rollers in contact with a surface of the UD prepreg tape so as to shift the two boundary portions away from the central portion.

According to a third aspect of the present disclosure, in the method for manufacturing a curved UD prepreg tape, the curved UD prepreg tape has two curved portions located at positions symmetrical to each other with respect to the central portion, a plurality of curvature portions having different curvature radii are arranged adjacent to each other in each of the two curved portions, and when the position of each of the two boundary portions shifts towards the central portion and reaches a boundary between adjacent ones of the curvature portions, the operation is temporarily interrupted, and the two rollers are shifted by the same distance in the directions in which the diameters of the two rollers decrease along the rotational axes or in the opposite directions.

According to a fourth aspect of the present disclosure, in the method for manufacturing a curved UD prepreg tape, the curved UD prepreg tape has two curved portions located at positions symmetrical to each other with respect to the central portion, a plurality of curvature portions having different curvature radii are arranged adjacent to each other in each of the two curved portions, at least one of the plurality of curvature portions is a portion including an arcuate portion and a linear portion and regarded as having an approximate curvature as a whole, and when the position of each of the two boundary portions shifts toward the central portion, the roller does not contact the surface of the UD prepreg tape when shifting in a portion corresponding to the linear portion.

According to a fifth aspect of the present disclosure, in the method for manufacturing a curved UD prepreg tape, the two boundary portions are held by two clips, respectively, and the deformable site is shear-deformed by rotating the two boundary portions in the same direction by an angle bisected by a straight line extending in a direction perpendicular to the longitudinal direction using the two clips.

### Explanation of Reference Signs

- CP₁, CP₂: Curved portion
- CT: Curved UD prepreg tape
- B, B₁, B₂: Boundary portion
- R₁, R₂: Roller
- T: Linear UD prepreg tape
- T_{C}: Central portion of UD prepreg tape
- T_{D}: Deformable site of UD prepreg tape
- T_{E}, T_{E1}, T_{E2}: End portion of UD prepreg tape
- T_{U}, T_{U1}, T_{U2}: Non-deformable site of UD prepreg tape
- Z: Longitudinal direction of UD prepreg tape

## Claims

1. A method for manufacturing a curved UD prepreg tape, the method comprising repeating an operation of shear-deforming, in a longitudinal direction of a linear UD prepreg tape, a deformable site between two boundary portions located at symmetrical positions with respect to a central portion in the longitudinal direction of the linear UD prepreg tape to displace non-deformable sites located at the end portion sides with respect to the two boundary portions of the UD prepreg tape in opposite directions transverse to the longitudinal direction of the UD prepreg tape, while shifting positions of the two boundary portions from end portion sides to the central portion of the UD prepreg tape.

2. The method according to claim 1, wherein
two rollers having a truncated cone shape are disposed at the two boundary portions with directions of rotational axes thereof being perpendicular to the longitudinal direction of the UD prepreg tape,
directions in which diameters of the two rollers decrease along the rotational axes are opposite to each other, and
the deformable site is shear-deformed by rotating the two rollers in contact with a surface of the UD prepreg tape so as to shift the two boundary portions away from the central portion.

3. The method according to claim 2, wherein
the curved UD prepreg tape has two curved portions located at positions symmetrical to each other with respect to the central portion,
a plurality of curvature portions having different curvature radii are arranged adjacent to each other in each of the two curved portions, and
when the position of each of the two boundary portions shifts towards the central portion and reaches a boundary between adjacent ones of the curvature portions, the operation is temporarily interrupted, and the two rollers are shifted by the same distance in the directions in which the diameters of the two rollers decrease along the rotational axes or in the opposite directions.

4. The method according to claim 2, wherein
the curved UD prepreg tape has two curved portions located at positions symmetrical to each other with respect to the central portion,
a plurality of curvature portions having different curvature radii are arranged adjacent to each other in each of the two curved portions,
at least one of the plurality of curvature portions is a portion including an arcuate portion and a linear portion and regarded as having an approximate curvature as a whole, and
when the position of each of the two boundary portions shifts toward the central portion, the roller does not contact the surface of the UD prepreg tape when shifting in a portion corresponding to the linear portion.

5. The method according to claim 1, wherein
the two boundary portions are held by two clips, respectively, and
the deformable site is shear-deformed by rotating the two boundary portions in the same direction by an angle bisected by a straight line extending in a direction perpendicular to the longitudinal direction using the two clips.
